Europäisches Patentamt

European Patent Office

Office européen des brevets

(19)

(11) **EP 0 608 304 B1**

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(21) Anmeldenummer: **92921421.1**

(22) Anmeldetag: **19.10.1992**

(51) Int Cl.6: **C04B 38/02**, C04B 26/10

(86) Internationale Anmeldenummer:
**PCT/EP92/02393**

(87) Internationale Veröffentlichungsnummer:
**WO 93/08142 (29.04.1993 Gazette 1993/11)**

(54) **VERFAHREN ZUR HERSTELLUNG VON FUGENSCHAUM**

PROCESS FOR PREPARING JOINT SEALING FOAM

PROCEDE DE PREPARATION D'UNE MOUSSE D'ETANCHEITE POUR JOINTS

(84) Benannte Vertragsstaaten:
**AT BE CH DE DK ES FR GB GR IE IT LI LU MC NL SE**

(30) Priorität: **18.10.1991 DE 4134550**

(43) Veröffentlichungstag der Anmeldung:
**03.08.1994 Patentblatt 1994/31**

(73) Patentinhaber:
- **FRAUNHOFER-GESELLSCHAFT ZUR FÖRDERUNG DER ANGEWANDTEN FORSCHUNG E.V.**
  **D-80636 München (DE)**
- **GIPS-SCHULE-STIFTUNG**
  **W-7000 Stuttgart 50 (DE)**

(72) Erfinder: **MEINHARDT, Stefan**
**D-7410 Reutlingen 17 (DE)**

(74) Vertreter: **Weisert, Annekäte, Dipl.-Ing. Dr.-Ing. et al**
**D-80539 München (DE)**

(56) Entgegenhaltungen:
**DE-C- 3 909 083**

**Beschreibung**

Die Erfindung betrifft ein Verfahren zur Herstellung von Fugen- bzw. Ortsschaum. Unter einem Ortsschaum versteht man einen PUR-Hartschaum, der am Verwendungort, also an Ort und Stelle erzeugt wird.

Im Bauwesen werden zum Abdichten von Fugen, z.B. beim Einbau von Fenstern und Türen zwischen Bauwerk und Einbauteilen Schäume eingesetzt, die auf Polyurethan basieren und mit Frigen, einem Fluorkohlenwasserstoff geschäumt werden. Diese Schäume haben den Vorteil der einfachen Anwendung aus der Sprühdose, sie entsprechen darüberhinaus den bauphysikalischen und mechanischen Anforderungen.

Die DE-PS 39 09 083 beschreibt einen Gipsschaumstoff mit poriger Struktur, enthaltend einen Polyharnstoff, der dadurch gekennzeichnet ist, daß er ein spezifisches Gewicht im Bereich von 0,1 bis 0,4 g/cm$^3$ besitzt, offenzellig ist und als Polyharnstoff das Kondensationsprodukt aus Diphenylmethan-4,4'-diisocyanat-Präpolymeren und Wasser enthält.

In der Praxis werden trotz der vielen Vorteile solcher Schäume neuerdings Bedenken erhoben. Diese beruhen vorwiegend auf der Verwendung eines Fluorkohlenwasserstoffs als Treibmittel, aber ebenso auf dem Kunststoff Polyurethan, der bei einer Entsorgung mit Problemen behaftet sein kann. Zahlreiche Architekten und Bauherren greifen aus diesem Grunde auf alte, wesentlich zeitaufwendigere Methoden zurück und stopfen diese Fugen wieder mit Mineralwolle oder organischen Zöpfen aus, wobei die Effizienz der Maßnahmen in höherem Maße von der Sorgfalt und Qualifikation der ausführenden Arbeiter abhängig ist, als dies bei den Schäumen der Fall war.

Bei dem in Kürze zu erwartenden Verbot von Fluorkohlenwasserstoffen ist die Entwicklung von neuen, unbedenklichen Schaumprodukten mit gleichen oder ähnlichen Eigenschaften daher angebracht.

Bei den bekannten Systemen unterscheidet man zwischen Ein- und Zweikomponenten-Systemen.

Einkomponentensysteme bestehen aus feuchtigkeitshärtenden Präpolymeren. Im Gegensatz zu den Zweikomponentensystemen dauert ihre Aushärtung länger, da die Umsetzung mit Luftfeuchtigkeit erfolgt. Ihr Haupteinsatzgebiet liegt vor allem im Abdichten von Hohlräumen in Bauwerken oder der Befestigung von Türzargen.

Zweikomponentensysteme bestehen aus Polyol und Polyisocyanat. Die Herstellung des Schaums erfolgt mit Hilfe leicht transportabler Schäummaschinen, wie z. B. Druckcontainern, nach der Gieß- oder Spritzmethode.

In beiden Fällen werden die unter Druck stehenden Komponenten als schäumfähiges Gemisch über ein Ventil ausgetragen. Je nach Treibverfahren wird ein geschlossen oder offenzelliger Schaum erzeugt. Zwischenzustände werden ebenfalls erhalten. Geschlossenzellige Schäume besitzen extrem niedrige Wärmeleitfähigkeiten, offenzellige Schäume hingegen hohe Schallabsorption.

Der vorliegenden Erfindung liegt die Aufgabe zugrunde, ein Verfahren zur Herstellung von Orts- bzw. Fugenschaum zur Verfügung zu stellen, bei dem kein schädlicher Fluorkohlenwasserstoff als Treibmittel verwendet werden muß. Der erfindungsgemäße umweltfreundlich hergestellte Orts- und Fugenschaum soll im Gegensatz zu den herkömmlichen Verfahren nicht durch organische Treibgase erzeugt werden.

Die Verarbeitung des Fugenschaums soll entsprechend der baupraktischen Anwendung in kleineren Einheiten erfolgen können, um geometrisch komplizierte Fugen in allen Bereichen leicht und gleichmäßig verfüllen zu können. Das erfindungsgemäße Verfahren soll mit Mehrkomponentensystemen unter Verwendung von Mehrkomponentensprühdosen bzw. mittels Spritzpistolen oder Kleinkompressoren durchgeführt werden können.

Der erfindungsgemäße Fugenschaum soll vor allem dort eingesetzt werden, wo fugenlose Dämmung aus Platten oder anderen Formteilen nur mangelhaft oder gar nicht erzielt werden kann. Typische Anwendungen sollen beim Verfüllen von Hohlräumen am Bau, z.B. zwischen Türzargen, im Bergbau zur Verfestigung von lockerem Gestein und zur Wärmeisolation von Hausgeräten, Behältern und Formteilen mit komplexer Geometrie, weiterhin in der Erdölindustrie erfolgen. Die erfindungsgemäß hergestellten Fugenschäume sollen ebenfalls zur schnellen und verhältnismäßig einfachen Erstellung von Notunterkünften verwendet werden. Die hergestellten "Iglus" sollen im Gegensatz zu Zelten eine hohe Wärmeisolation und daher einen guten Schutz gegen Kälte bilden.

Die qualitativ hohen physikalischen und chemischen Eigenschaften sowie das Preisniveau der auf dem Markt befindlichen Orts- und Fugenschäume soll erhalten bleiben. Insbesondere muß der erfindungsgemäß hergestellte Schaum die folgenden Forderungen erfüllen:

-   der gebildete Schaum und das Treibgas müssen physiologisch unbedenklich sein

-   die Porenstruktur und die Oberflächenbeschaffenheit sollen regulierbar sein.

-   die mechanischen Eigenschaften, wie Elastizität, Bruchfestigkeit, Wärmeleitfähigkeit und Schalldämmung sowie die Brandschutzklasse sollen im Vergleich zu den herkömmlichen Schäumen erhalten bleiben

-   Gewährleistung einer einfachen und unproblematischen Ap plikation

- hohe Schaumergiebigkeit

- die Herstellungskosten sollen nicht über denen herkömmlicher Systeme liegen

Gegenstand der Erfindung ist ein Verfahren zur Herstellung von Orts- bzw. Fugenschaum, das dadurch gekennzeichnet ist, daß Gipsdihydrat in Wasser aufgeschlämmt wird, wobei 30 bis 70 Gew.-% Gipsdihydrat und 70 bis 30 Gew.-% Wasser, bezogen auf die Schlämme, vermischt werden, 40 bis 60 Gew.-% der erhaltenen Wasserschlämme und 60 bis 40 Gew.-% Diphenylmethan-4,4'-diisocyanat-Präpolymeres, Diphenylmethan-4,2'-diisocyanat-Präpolymeres, 2,4-Toluylendiisocyanat, 2,6-Toluylendiisocyanat oder ein Gemisch dieser Verbindungen, wobei die Gew.-% auf die Gesamtmischung bezogen sind, unter inniger Vermischung in die Fuge eingebracht und härten gelassen wird.

Der erfindungsgemäße Fugenschaum kann überall dort eingesetzt werden, wo in der Vergangenheit ein derartiger Schaum verwendet wurde. Er kann beispielsweise zur fugenlosen Dämmung von Platten oder anderen Formteilen, beim Verfüllen von Hohlräumen am Bau, z.B. zwischen Türzargen, im Bergbau zur Verfestigung von lockerem Gestein und zur Wärmeisolation von Hausgeräten, Behältern und Formteilen mit komplexer Geometrie, in der Erdölindustrie und zur schnellen und verhältnismäßig einfachen Herstellung von Notunterkünften verwendet werden.

Die erfindungsgemäß hergestellten Fugenschäume sind wärmeund schalldämmend. Insbesondere sind die mechanischen Eigenschaften wie Elastizität, Bruchfestigkeit, Wärmeleitfähigkeit und Schalldämmung sowie die Brandschutzklasse im Vergleich zu den herkömmlichen Schäumen genauso gut oder teilweise besser. Der erfindungsgemäß hergestellte Fugenschaum ist monomerfrei, d.h. physiologisch unbedenklich und in der Porenstruktur und Oberflächenbeschaffenheit in an sich bekannter Weise regulierbar. Die Durchführung des erfindungsgemäßen Verfahrens erfolgt auf einfache und unproblematische Weise. Das erfindungsgemäße Verfahren besitzt eine hohe Schaumergiebigkeit und die Kosten der Herstellung des Fugenschaums liegen nicht über denen von Fugenschaum, der nach bekannten Verfahren hergestellt wird.

Als Gips können bei der vorliegenden Erfindung alle neutral oder schwach sauer reagierenden,nicht hydraulisch abbbindenden Calciumsulfat-Modifikationen in der üblichen pulverigen Kornfeinheit eingesetzt werden. Vorzugsweise werden handelsübliche Gipsqualitäten mit einem Wasser-Gips-Faktor von 0,3 eingesetzt. Es ist besonders bevorzugt, REA-Gips zu verwenden. REA-Gips stammt aus Rauchgas-Entschwefelungs-Anlagen. REA-Gipse sind feuchte Dihydrate die jedoch, abhängig von der Menge, auch als Semihydrate abgegeben werden können.

Das Gipsdihydrat bevorzugt REA-Gips, der in Wasser aufgeschlämmt wird. Die Wasserschlämme wird so hergestellt, daß 30 bis 70 Gew.-% Dihydrat, vorzugsweise 40 bis 60 Gew.-% und am meisten bevorzugt 45 bis 55 Gew.-% Gipsdihydrat in der entsprechenden Wassermenge aufgeschlämmt werden. Die Gewichtsprozente beziehen sich auf die Gipsdihydrat enthaltende Wasserschlämme.

Erfindungsgemäß wird die Wasserschlämme aus Gipsdihydrat mit Diphenylmethan-4,4'-diisocyanat-Präpolymeren, Diphenylmethan-4,2'-diisocyanat-Präpolymeren, 2,4-Toluylendiisocyanat, 2,6-Toluylendiisocyanat oder einem Gemisch dieser Verbindungen vermischt. Das Gemisch kann beliebige Komponenten der einzelnen Verbindungen enthalten. In dieser Richtung bestehen keinerlei Beschränkungen. Die genannten Präpolymeren haben den besonderen Vorteil, lösungsmittelfrei zu sein, als Präpolymere einen gleichbleibenden NCO-Gehalt zu bieten und eine monomere Menge von unter 0,5 Gew.-% aufzuweisen. Das Diphenylmethan-4,4'-diisocyanat-Präpolymere und das Diphenylmethan-4,2'-diisocyanat-Präpolymere sind bevorzugt. Es ist bevorzugt, ein Diphenylmethan-4,4'-diisocyanat-Präpolymeres oder ein Diphenylmethan-4,2'-Diisocyanat-Präpolymeres zu verwenden, welches einen NCO-Gehalt im Bereich von 12 bis 20 Gew.-%, besonders bevorzugt, 14 bis 18 Gew.-% und am meisten bevorzugt 16 Gew.-%, besitzt. Solche Produkte sind im Handel erhältlich. Die Produkte besitzen eine Viskosität bei 20° C von 10.000 mPa/s ± 2000. Es ist weiterhin bevorzugt, ein 2,4-Toluylendiisocyanat oder 2,6-Toluylendiisocyanat mit einem NCO-Gehalt im Bereich von 2 bis 20 Gew.-% zu verwenden. Solche Präpolymere werden von der Firma Bayer vertrieben und sind beispielsweise im Handel unter dem Warenzeichen Desmodur E 14 mit einem NCO-Gehalt von 3,5% und einem Äquivalentgewicht von 1200 oder als Desmodur E 22 mit einem NCO-Gehalt von 8 Gew.-% und einem Äquivalentgewicht von 525 erhältlich.

Bei dem erfindungsgemäßen Verfahren reagiert das Diisocyanat-Präpolymere mit dem Wasser, welches zum Aufschlämmen des Gipses verwendet wird und dem Kristallwasser des Gipses in an sich bekannter Weise unter Bildung eines Carbamidsäurederivats, welches unter Abspaltung von Kohlendioxid in ein primäres Amin übergeht. Das primäre Amin reagiert mit dem Isocyanat zu einem Harnstoffderivat bzw. Ureid, welches gegebenenfalls weiter reagieren kann. In der vorliegenden Anmeldung soll der Ausdruck "Polyharnstoff" das entstehende Kondensationsprodukt aus Diphenylmethan-4,4'- bzw. Diphenylmethan-4,2'-diisocyanat-Präpolymerem und Wasser umfassen.

Bei dem erfindungsgemäßen Verfahren werden 40 bis 60 Gew.-% Wasserschlämme, bevorzugt 45 bis 55 Gew.-% Wasserschlämme und am meisten bevorzugt 50 Gew.-% Wasserschlämme und 60 bis 40 Gew.-% Präpolymeres, bevorzugt 55 bis 45 Gew.-% Präpolymeres und am meisten bevorzugt 50 Gew.-% Präpolymeres oder ein Gemisch aus Präpolymeren in die Fuge eingebracht, wobei die Gewichtsprozente auf die Gesamtmischung bezogen sind.

Erfindungsgemäß kann man der Wasserschlämme oder dem Präpolymeren oder dem Gemisch aus Präpolymeren ein Netzmittel, einen Katalysator oder einen Schaumstabilisator oder ein Gemisch aus mindestens zwei dieser Verbindungen zusetzen. Diese Verbindungen werden in Mengen bis zu 5 Gew.-Teilen, bezogen auf 100 Gew.-Teile, dem Gemisch aus Wasserschlämme und Präpolymeren zugegeben.

Der Katalysator bewirkt ein schnelles Abbinden des verschäumten Materials in der Fläche. Der Zellstabilisator ermöglicht eine Regulierung der Zellgröße und das Netzmittel ermöglicht eine hohe Füllstoffpackung, d.h. einen hohen Gipseinsatz. Der Fugenschaumstoff kann andere übliche Zusatzstoffe in den üblichen Mengen, beispielsweise in einer Menge von 0,1 bis 2 Gew.-%, bezogen auf das Trockengewicht von Gips und Polyharnstoff, enthalten.

Als Katalysator wird bei dem erfindungsgemäßen Verfahren beispielsweise Triethylamin, Dibutylzinndilaurat oder Dioctylzinndilaurat verwendet. Grundsätzlich können alle die Katalysatoren eingesetzt werden, welche auf diesem Gebiet bekannt sind.

Als Zellstabilisatoren werden vorzugsweise Siliconstabilisatoren verwendet. Diese sind im Handel erhältlich und es gibt eine große Auswahl.

Als Netzmittel können erfindungsgemäß an sich bekannte Netzmittel, d.h. Handelsprodukte wie Fettalkoholsulfonate, quaternäre Ammoniumverbindungen und auch andere kationische, nichtionische und anionische Mittel eingesetzt werden. Spezifische Beispiele für Netzmittel sind Ethylenoxid/-Propylenoxid-Polyglykol, ein Betainsiloxan-Tensid, ein niedermolekulares Acryl-Copolymer und ein Alkylphenoloxethylat. Dieses ist bevorzugt. Die Netzmittel beeinflussen die Durchhärtung und die Elastifizierung. Sie werden in an sich bekannten Mengen, beispielsweise von 0,1 bis 2 Gew.-Teilen, vorzugsweise in Mengen von 0,5 bis 1,0 Gew.-Teilen, besonders bevorzugt in einer Menge von 0,5 Gew.-Teilen, bezogen auf 100 Gew.-Teile, als Gemisch aus Wasserschlämme und Diisocyanat-Präpolymeren verwendet. Sie werden zur Regelung der Porengröße eingesetzt. Je höher der Netzmittelanteil ist, umso kleiner werden die Poren.

Zur Steuerung der Isocyanat-Wasser-Reaktion können prinzipiell dieselben Katalysatoren eingesetzt werden, die aus der PUR-Blidung bekannt sind. So zählen zu den wirkungsvollsten Katalysatoren auch hier die Zinn-Organo-Verbindungen. Durch den Einsatz von Zinn-Organo-Verbindungen kann die Schaumbildung innerhalb von 30 Sekunden erfolgen.

Zur Steuerung der Zellwandstärke und der Zellgröße dienen spezielle oberflächenaktive Verbindungen. Sie beeinflussen die Oberflächenspannung an den sich bildenen Micellwänden und verhindern im ungünstigsten Fall das Kollabieren des Schaumes. Für den Einsatz eignen sich spezielle Silicontenside aber auch Celluloseabkömmlinge. Cellusosederivate ermöglichen gleichzeitig die Einstellung hoher Viskositätswerte bei der wäßrigen Komponente. Diese sind erforderlich, um ein Fließen des reaktionsfähigen bereits aufgetragenen Gemisches durch die Schwerkraft z.B. zwischen Türzargen oder Fensterrahmen und Mauerwerk zu verhindern.

Vorzügliche Ergebnisse werden beim Einsatz bestimmter, in wäßriger Phase verdickend wirkender Montmorrilonit-Abwandlungprodukte, die als Bentone im Handel sind, erhalten. Bentone EW z.B. erhöht neben der Viskosität in der Wasserphase auch die Materialhaftung auf den vorhandenen Substraten wie Wand, Holz, Ziegel usw. Bentone EW ist beispielsweise hochgereinigtes Magnesiummontmorillonit, SG 2,4. Die Bentone EW werden von der Titangesellschaft in Leverkusen vertrieben.

Durch den Einbau von REA-Gips wird die Brennbarkeit des erfindungsgemäßen Schaumes herabgesetzt, da es oberhalb von 120 - 130° C zur Abspaltung von Kristallwasser kommt. Zur weiteren Verbesserung des Brandverhaltens kann ein zusätzlich flammhemmendes System zugefügt werden. Im Gegensatz zu den üblichen organohalogenierten flammhemmenden Systemen kann erfindungsgemäß Hydrargillit, d.h. ein Aluminiumhydroxid, verwendet werden. Dies bietet einen physiologisch unbedenklichen Flammschutz. Die Kosten von Hydrargillit sind vergleichsweise günstig. Hydrargillit reagiert unter Wärmezufuhr über mehrere Zwischenstufen zu Aluminiumoxid und Wasser. Die Reaktion ist stark endotherm. Das gebildete Wasser wirkt zusätzlich flammhemmend. Es ist erfindungsgemäß bevorzugt den flammhemmenden Stoff Hydrargillit der Wasserschlämme zuzusetzen. Um den Produkten höchste Flammschutzeigenschaften zu verleihen, können außer Hydrargillit, d.h. Aluminiumhydroxyd, auch Magnesiumoxid, Zinkborat oder deren Gemisch eingesetzt werden. Die Verwendung dieser Austauschstoffe hängt von dem beabsichtigten Endzweck ab. Erfindungsgemäß können bis zu 50% des Gipshydrats durch solche Austauschstoffe ersetzt werden. Vorzugsweise werden bis zu 30 Gew.-% des Gipshydrats und besonders bevorzugt bis zu 10 Gew.-% des Gipshydrats durch Austauschstoffe ersetzt.

Gemäß einer weiteren erfindungsgemäß bevorzugten Ausführungsform wird durch Einsatz von speziellen Cellulosederivaten die wäßrige Gips-Hydrargillit-Komponente thixotrop eingestellt. Die so eingestellten Viskositäten verhindern das Fließen der schäumfähigen Mischung in der Senkrechten.

Für den einfachen do-it-yourself-Gebrauch wurden die wäßrige und die Isocyanat-Phase in eine spezielle Zwei-KomponentenKartusche eingefüllt. Über einen Statikmischer können die Komponenten mit Hilfe einer Kartuschepistole unter Druck vollständig gemischt und als schaumfähiges Gemisch ausgetragen werden.

Bei dem erfindungsgemäßen Verfahren können beispielsweise die folgenden Einzelkomponenten eingesetzt werden:

Einzelkomponenten:

Polyisocyanat: Präpolymer auf der Grundlage von 4,4'MDI, 4,2'MDI und speziellen Polyolen mit einem freien Isocyanatgehalt von 16% und einer Viskosität von mindestens 10.000 mPas (erhältlich von Bayer AG, Leverkusen als Desmodur E 21).

Präpolymere auf der Grundlage von 2,4 TDI oder 2,6 TDI (erhältlich von Bayer AG unter den Bezeichnungen Desmodur E14 mit einem NCO-Gehalt von 3,5 und einem Äquivalentgewicht von 1200 und Desmodur E 22 mit einem NCO-Gehalt von 8 Gew.-% und einem Äquivalentgewicht von 525.

Füllstoffe: REA-Gips gesiebt mit einer Kornfeinheit von mindestens 50 μm (erhältlich von der Ruhrkohle AG, Essen)
Hydrargillit (erhältlich von Martinswerk GmbH, 5010 Bergheim, Martinal)

Wäßrige Phase: Leitungswasser
Methylcellulose oder Hydroxyethylcellulose (Walocel MT 40000 PV erhältlich bei Wolff Walsrode AG, 3030 Walsrode; Natrosol 250 high von Aqualon GmbH, 4000 Düsseldorf)

Additive: Katalysator auf der Basis von Dibutylzinndilaurat (erhältlich von Merck AG, Darmstadt)
Zellstabilisatoren auf der Basis spezieller Silicontenside (erhältlich von Goldschmidt AG, Chemische Fabriken, 4300 Essen 1)

Zwei-Komponenten-System

Isocyanat-Komponente: Man legt das Präpolymere vor und setzt ca. 0,1% Dibutylzinndilaurat mit ca. 0,5% Silicontensid zu. Anschließend wird das System homogen gemischt.

Wäßrige Komponente: Man stellt eine hochviskose, thixotrope Suspension aus einer Hydrargillit-REA-Gips-Mischung her mit einem Festkörpergehalt von mindestens 66%. Die Einstellung der Thixotropie erfolgt mit Hilfe von Methylcellulose oder Hydroxyethylcellulose, die zu 1 - 3% dem Leitungswasser beigefügt wird. Zur Einstellung der Thixotropie kann auch Bentone EW in Mengen bis zu 15 Gew.-% eingesetzt werden.

Schaumfähiges Gemisch: Einen optimalen Schaum erhält man durch Mischen von einem Volumenteil Isocyanat-Komponente und einem Volumenteil der wäßrigen Komponente. Der Schaum entsteht unmittelbar nach Zusammenfügen der beiden Komponenten.

Das erfindungsgemäße Verfahren kann auch in kleinem Maßstab durchgeführt werden. Die Komponenten können z.B. als 0,5 oder 11-Gebinde, beispielsweise in Baumärkten, verkauft werden. Das Verfahren kann ebenfalls dem do-it-yourself-Bereich zugänglich gemacht werden. Beispielsweise können die wäßrige Aufschlämmung und die Isocyanat-Komponente in eine Zwei-Kom ponenten-Kartusche eingefüllt werden. Die Kammervolumina sollten jeweils gleichen Rauminhalt besitzen. Ihre Böden sind beweglich, aber undurchlässig zu ihrer Umgebung. Mit Hilfe einer mechanischen Druckpistole werden beide Komponenten gleichzeitig aus der Kartusche gedrückt und in einem Statikmischer vollständig gemischt.

Für die Verarbeitung größerer Mengen eignet sich ein Zweikammer-Container mit beweglichen Kolben, die z.B. pneumatisch gesteuert werden. Zur Mischung der Komponenten dient wiederum ein geeigneter Statikmischer.

Die Schäume besitzen Raumgewichte von ca. 50 g/l im Mittel und sind relativ elastisch. Sie besitzen eine hohe Haftkraft zu Mauerwerken. Ihre Wärmeleitfähigkeit ist sehr gering. Der λ-wert liegt bei 0,04.

Die physikalischen Eignungstests, wie Wasserdampf-Durchlässigkeit, Wärmeleitfähigkeit, Bruchfestigkeit und Abriebfestigkeit entsprechend den für die genannten Anwendungen geforderten Kriterien.

Der Schaum erhält nach einer Stunde seine Endfestigkeit und ist problemlos schneidbar. Das Schaumgerüst ist hydrolysefest und beständig gegen verdünnte Säuren und Laugen. Der Einbau von REA-Gips und Hydrargillit führt durch Wasserabspaltung zu flammhemmenden Reaktionen. Die Brandschutzklasse B2 ist erfüllt.

Der entwickelte Orts- und Fugenschaum wurde zwischen Ziegelsteinen, Holz und Ziegelstein und Holz und Pappe geschäumt. Er kann zwischen die üblichen, am Bau verwendeten Substrate eingebracht werden. In allen Fällen waren die Haftkräfte an den Materialoberflächen größer als der Zusammenhalt des Schaumgefüges. Der Schaum läßt sich nach Aushärtung problemlos mechanisch bearbeiten. Er läßt sich exakt schneiden oder sägen.

Der Einbau von Aluminiumhydroxid führt bei Entflammungsversuchen zu einer merklichen Verbesserung des Brandverhaltens. Der Umbau von Aluminiumhydroxid und die damit einhergehende Abspaltung von Wasser, das auch in größerer Menge aus dem ebenfalls anwesenden REA-Gips zusätzlich gleichzeitig anfällt, verhindert den direkten Angriff der Flammen. Die Brandschutzklasse B2 nach DIN 4102 ist erfüllt.

Die folgenden Beispiele erläutern die Erfindung:

**Beispiel 1**

99,4 Gew.-Teile Desmodur E 21 Präpolymeres auf der Grundlage von 4,4'MDI und 4,2'MDI und speziellen Polyolen mit einem freien Isocyanatgehalt von 16% und einer Viskosität von mindestens 10.000 mPas, erhältlich von Bayer AG, Leverkusen, wurden mit 0,1 Gew.-Teilen Dibutylzinndilaurat und 0,5 Gew.-Teilen Siliconschaumregulator gut vermischt. Getrennt wurden 56,0 Gew.-Teile REA-Gips als Dihydrat, 10,0 Gew.-Teile $Al(OH)_3$ und 34,0 Gew.-Teile 2%ige Methylcellulose in $H_2O$ vermischt. Die beiden Mischungen wurden in einer Menge von 1:1 in eine Kartusche gegeben und zum Ausschäumen einer Fuge verwendet.

**Beispiel 2**

Es wird wie im Beispiel 1 gearbeitet. Folgende Komponenten werden hergestellt:

| | |
|---|---|
| 80 | Teile REA-Gips |
| 20 | Teile Hydrargillit |
| 0,5 | Teile Silicon-Tensid (TEGO 5852) |
| 1 | Teil Bentone EW |
| 32 | Teile Wasser |
| 133,5 | Teile wäßrige Komponente |

100 Teile wäßrige Komponente mit 68 Teilen Desmodur E 21 (+ Zn-Dibutyldilaurat) mischen.

**Beispiel 3**

Es wird, wie im Beispiel 1 beschrieben, gearbeitet und folgende Komponenten werden hergestellt:

| | |
|---|---|
| 80 | Teile REA-Gips |
| 20 | Teile Hydrargillit |
| 2 | Teile Bentone |
| 0,5 | Teile Silicon-Tensid (TEGO 5852) |
| 40 | Teile 2,0%ige Methylhydroxyethylcellulose in Wasser (z.B. Walscell MW 40.000 PFV, Walsrode) |
| 142,5 | Teile wäßrige Komponente |

100 Teile wäßrige Komponente mit 65 Teilen Desmodur E 21 mischen.

**Beispiel 4**

Teil A:

| | |
|---|---|
| 57 | REA-Gips |
| 15 | Hydrargillit |
| 0,4 | Silicon-Tensid |
| 2 | Bentone EW |
| 25,6 | $H_2O$ |
| 100,0 | |

Teil B: Desmodur E 14 Teile A und B werden im Verhältnis 1:1 gemischt.

**Beispiel 5**

Man arbeitet, wie im Beispiel 1 beschrieben. Es werden die in Beispiel 4 beschriebenen Teile A und B hergestellt. Die Teile A und B werden im Verhältnis 1:1,5 vermischt.

**Patentansprüche**

1. Verfahren zur Herstellung von Fugenschaum, dadurch **gekennzeichnet,** daß Gipsdihydrat in Wasser aufgeschlämmt wird, wobei 30 bis 70 Gew.-% Gipsdihydrat und 70 bis 30 Gew.-% Wasser, bezogen auf die Schlämme, vermischt werden, 40 bis 60 Gew.-% der erhaltenen Wasserschlämme und 60 bis 40 Gew.-% Diphenylmethan-4,4'-diisocyanat-Präpolymeres, Diphenylmethan-4,2'-diisocyanat-Präpolymeres, 2,4-Toluylendiisocyanat, 2,6-Toluylendiisocyanat oder ein Gemisch dieser Verbindungen, wobei die Gew.-% auf die Gesamtmischung bezogen sind, unter inniger Vermischung in die Fuge eingebracht und härten gelassen wird.

2. Verfahren nach Anspruch 1, dadurch **gekennzeichnet,** daß entweder der Wasserschlämme oder dem Präpolymeren oder dem Gemisch aus Präpolymeren ein Netzmittel, ein Katalysator oder ein Schaumstabilisator oder ein Gemisch aus mindestens zwei dieser Verbindungen zugesetzt wird.

3. Verfahren nach einem der Ansprüche 1 oder 2, dadurch **gekennzeichnet,** daß die Wasseraufschlämme und das Präpolymere oder das Gemisch aus Präpolymeren, die gegebenenfalls Katalysator, Schaumstabilisator und/oder Netzmittel enthalten, gleiche Viskositäten besitzen oder daß sich die Viskositäten nicht wesentlich unterscheiden.

4. Verfahren nach mindestens einem der vorhergehenden Ansprüche, dadurch **gekennzeichnet,** daß ein Diphenylmethan-4,4'- oder Diphenylmethan-4,2'-diisocyanat-Präpolymeres mit einem NCO-Gehalt im Bereich von 12 bis 20 Gew.-% oder 2,4-Toluylendiisocyanat oder 2,6-Toluylendiisocyanat mit einem NCO-Gehalt im Bereich von 2 bis 20 Gew.-% verwendet wird.

5. Verfahren nach mindestens einem der vorhergehenden Ansprüche, dadurch **gekennzeichnet,** daß als Katalysator Triethylamin, Tributylzinndilaurat oder Dioctylzinnlaurat als Stabilisator, Silicon-Stabilisatoren und als Netzmittel LUTENSOL$^R$, ein handelsübliches Alkylphenoloxethylat, verwendet werden.

6. Verfahren nach mindestens einem der vorhergehenden Ansprüche, dadurch **gekennzeichnet,** daß ein Teil des eingesetzten Gipsdihydrats durch Aluminiumhydroxyd, Magnesiumhydroxyd, Zinkborat oder deren Gemisch ersetzt wird.

7. Verfahren nach Anspruch 6, dadurch **gekennzeichnet,** daß bis zu 50 Gew.-% des Gipsdihydrats durch Aluminiumhydroxyd, Magnesiumhydroxyd, Zinkborat oder deren Gemische ersetzt werden.

8. Verfahren nach mindestens einem der vorhergehenden Ansprüche, dadurch **gekennzeichnet,** daß die Vermischung der Wasserschlämme und des Präpolymeren mittels eines Mehrkomponentengeräts erfolgt.

9. Verfahren nach mindestens einem der vorhergehenden Ansprüche, dadurch **gekennzeichnet,** daß als Mehrkomponentengerät eine Sprüdose oder eine Spritzpistole verwendet wird.

10. Verfahren nach mindestens einem der vorhergehenden Ansprüche, dadurch **gekennzeichnet,** daß die Aushärtung bei Raumtemperatur und bei Normaldruck erfolgt.

**Claims**

1. A process for producing joint sealing foam, characterised in that gypsum dihydrate is slurried in water, wherein 30 to 70 % by weight of gypsum dihydrate and 70 to 30 % by weight of water, with respect to the slurry, are mixed, and 40 to 60 % by weight of the aqueous slurry obtained and 60 to 40 % by weight of diphenylmethane-4,4'-diisocyanate prepolymer, diphenylmethane-4,2'-diisocyanate prepolymer, toluene 2,4-diisocyanate, toluene 2,6-diisocyanate or a mixture of these compounds, wherein the percentages by weight relate to the total mixture, are introduced into the joint with intimate mixing and allowed to harden.

2. A process according to claim 1, characterised in that a surface-active agent, a catalyst, a foam stabiliser or a mixture of at least two of these compounds is added either to the aqueous slurry or to the prepolymer or to the mixture of prepolymers.

3. A process according to either one of claims 1 or 2, characterised in that the aqueous slurry and the prepolymer or the mixture of prepolymers, which optionally contain a catalyst, a foam stabiliser and/or a surface-active agent, have the same viscosities or that their viscosities are not substantially different.

4. A process according to at least one of the preceding claims, characterised in that a diphenylmethane-4,4'- or a diphenylmethane-4,2'-diisocyanate prepolymer with an NCO content in the range of 12 to 20 % by weight, or toluene 2,4-diisocyanate or toluene 2,6-diisocyanate with an NCO content in the range of 2 to 20 % by weight is used.

5. A process according to at least one of the preceding claims, characterised in that triethylamine, tributyltin dilaurate or dioctyltin laurate are used as the catalyst, silicone stabilisers are used as the stabiliser, and LUTENSOL®, a commercially available alkylphenol oxyethylate, is used as the surface-active agent.

6. A process according to at least one of the preceding claims, characterised in that part of the gypsum dihydrate used is replaced by aluminium hydroxide, magnesium hydroxide, zinc borate or a mixture thereof.

7. A process according to claim 6, characterised in that up to 50 % by weight of the gypsum dihydrate is replaced by aluminium hydroxide, magnesium hydroxide, zinc borate or mixtures thereof.

8. A process according to at least one of the preceding claims, characterised in that mixing of the aqueous slurry and the prepolymers is effected by means of a multicomponent device.

9. A process according to at least one of the preceding claims, characterised in that a spray nozzle or spray gun is used as the multicomponent device.

10. A process according to at least one of the preceding claims, characterised in that hardening is effected at room temperature and under normal pressure.

**Revendications**

1. Procédé de préparation d'une mousse de remplissage de joints, caractérisé en ce qu'on met du gypse dihydraté en suspension dans de l'eau en mélangeant 30 à 70 % en poids de gypse dihydraté et 70 à 30 % en poids d'eau, par rapport à la suspension, on mélange intimement 40 à 60 % en poids de la suspension aqueuse obtenue et 60 à 40 % en poids d'un prépolymère de diphénylméthane-4,4'-diisocyanate, d'un prépolymère de diphénylméthane-4,2'-diisocyanate, de 2,4-toluylène-diisocyanate, de 2,6-toluylène-diisocyanate ou d'un mélange de ces composés, les pourcentages en poids se rapportant au mélange total, on introduit le mélange résultant dans le joint et on le laisse durcir.

2. Procédé selon la revendication 1, caractérisé en ce qu'on ajoute un agent mouillant, un catalyseur ou un stabilisant de mousse, ou un mélange d'au moins deux de ces composés, à la suspension aqueuse ou au prépolymère ou au mélange de prépolymères.

3. Procédé selon la revendication 1 ou 2, caractérisé en ce que la suspension aqueuse et le prépolymère ou le mélange de prépolymères, qui contiennent éventuellement un catalyseur, un stabilisant de mousse et/ou un agent mouillant, ont la même viscosité ou en ce que leur viscosité n'est pas essentiellement différente.

4. Procédé selon au moins une des revendications précédentes, caractérisé en ce qu'on utilise un prépolymère de diphénylméthane-4,4'-diisocyanate ou un prépolymère de diphénylméthane-4,2'-diisocyanate ayant une teneur en NCO de 12 à 20 % en poids, ou du 2,4-toluylène-diisocyanate ou du 2,6-toluylène-diisocyanate ayant une teneur en NCO de 2 à 20 % en poids.

**5.** Procédé selon au moins une des revendications précédentes, caractérisé en ce qu'on utilise de la triéthylamine, du dilaurate de tributylétain ou du laurate de dioctylétain comme catalyseur, des stabilisants à base de silicone comme stabilisant, et LUTENSOL[(R)], qui est un oxéthylate d'alkylphénol du type commercial, comme agent mouillant.

**6.** Procédé selon au moins une des revendications précédentes, caractérisé en ce qu'on remplace une partie du gypse dihydraté utilisé par de l'hydroxyde d'aluminium, de l'hydroxyde de magnésium, du borate de zinc ou des mélanges de ceux-ci.

**7.** Procédé selon la revendication 6, caractérisé en ce qu'on remplace jusqu'à 50 % en poids du gypse dihydraté par de l'hydroxyde d'aluminium, de l'hydroxyde de magnésium, du borate de zinc ou des mélanges de ceux-ci.

**8.** Procédé selon au moins une des revendications précédentes, caractérisé en ce qu'on effectue le mélange de la suspension aqueuse et du prépolymère au moyen d'un appareil à plusieurs composants.

**9.** Procédé selon au moins une des revendications précédentes, caractérisé en ce qu'on utilise un pulvérisateur ou un pistolet à pulvérisation comme appareil à plusieurs composants.

**10.** Procédé selon au moins une des revendications précédentes, caractérisé en ce qu'on effectue le durcissement à la température ambiante et à la pression atmosphérique.